# EUROPEAN PATENT APPLICATION

(11) **EP 3 855 728 A1**
(43) Date of publication of application: **28.07.2021**
(21) Application number: 21158762.1
(22) Date of filing: 14.05.2015
(51) Int. Cl.: H04N 5/372, H04N 5/369

(54) **TDI LINE IMAGE SENSOR**

(30) Priority: 15.05.2014 KR 20140058501
(62) Divisional of application: 15793516.4
(71) Applicant: Vieworks Co., Ltd., Anyang-si, Gyeonggi-do 431-060 (KR)
(72) Inventor: SEO, Kyoung Ryoul, Gyeonggi-do 443-270 (KR)
(74) Representative: Lahrtz, Fritz

(57) **Abstract**

The present invention provides a TDI line image sensor. The TDI line image sensor according to the present invention comprises: a pixel unit, which has N line sensors having M CCDs arranged in a line and being arranged in a scan direction, moves, in the scan direction, charges accumulated in the respective columns of the line sensors, and accumulates the same; and an output unit for parallelly receiving as inputs the charges accumulated in the pixel unit from the respective columns, performing analog-to-digital conversion on and storing the charges, and then sequentially outputting the same.

## Description

### [Technical Field]

The present invention relates to a time delay integration (TDI) line image sensor. Particularly, the present invention relates to a TDI line image sensor in which a pixel unit includes charge-coupled devices (CCDs) configured to accumulates charges in accordance with the TDI method, and an output unit performs analog-to-digital (AD) conversion on the charges accumulated in the CCDs in each column, stores the resulting signals in a memory buffer, and then sequentially outputs the stored signals. The TDI line image sensor of the present invention can improve the resolution and transmission rate, while reducing power consumption and noise, due to the characteristics of CCDs and complementary metal-oxide-semiconductor (CMOS) devices.

### [Background Art]

Recently, with mass production, automation, and refinement of production facilities, functions which rely on the naked eyes of a human or various types of sensors have been increasingly replaced by vision machines including image sensors. Charge-coupled devices (CCDs) are semiconductor devices that are mainly used in image sensors.

A CCD refers to a device capable of transmitting charges from one device to another adjacent device. An image sensor including CCDs has a structure in which the change of the amount of free charges in each cell caused by an amount of light is converted into an electrical signal.

Structurally, a CCD generally includes a cell area in which charges are substantially accumulated due to an amount of light, and an output unit including a shift register which serves as a path through which the accumulated charges are sequentially transmitted.

Operating methods of CCDs are generally divided into the area scan method, the line scan method, the time delay integration (TDI) line scan method, and the like, depending on how cells are arranged in the arrays, and images are generated.

An image sensor using the line scan method (hereinafter referred to as a "line sensor") is a one-dimensional sensor in which pixels that receive image light are arranged in a line. When a two-dimensionally widened image is taken, the subject is sequentially imaged line-by-line by moving the line sensor or the subject.

That is, the line scan method is a method in which one line is exposed and transmitted at a certain speed at a time, and has an advantage in that high-speed and high-resolution images can be obtained at a low cost compared to the area scan method. For example, in order to obtain a frame having a size of 2048 ^{∗} 2048, only 2K pixels are required in the line scan method, compared to 4M pixels in the area scan method. Further, frames having various sizes such as 2048 ^{∗} 2048, 2048 ^{∗} 1000, and the like can be obtained using the same 2K pixels.

However, when a high-speed scan method, in which a subject moving at a high speed is imaged or a subject is imaged by a line sensor moving at a high speed, is performed, the time during which charges can be accumulated per line is reduced because the accumulation and transmission of charges at a high speed needs to be repeated in each line, and thus the amount of light received for the image becomes insufficient. Thus, a greater amount or intensity of light needs to be received, but the amount or intensity of light cannot be indefinitely increased due to the lighting devices' limitations.

Accordingly, while research on increasing sensitivity by improving materials of a pinned-photodiode (PPD), a complementary metal-oxide-semiconductor (CMOS) sensor, and the like has been conducted, a method for accumulating a greater amount of light by arranging several line sensors together to increase sensitivity has been proposed.

In an image sensor using the TDI line scan method (hereinafter referred to as a "TDI line image sensor"), line sensors are arranged for a plurality of stages in the scan direction, charges accumulated in CCDs in each line are synchronized with the movement of an image, and are transmitted to CCDs in the next line. The charges are superimposed and are then output by repeating the process until the last line sensor, and, as a result, an image having a sufficient amount of light can be obtained even in a high-speed scan method.

The related art of the present invention is disclosed in Korean Patent Application Publication No. 2009-0023573 (published on March 5, 2009, Invention Title: A method for Controlling a TDI-CCD Image Sensor).

### [Disclosure]

### [Technical Problems]

The present invention is directed to providing a time delay integration (TDI) line image sensor in which charges accumulated in charge-coupled devices (CCDs) in each line are moved in the scan direction to CCDs in an adjacent next line, are moved to a last line and accumulated, and are then output to a signal processing unit by moving the charges accumulated in the last line perpendicularly to the scan direction, and data with respect to each cell may be sequentially processed in units of lines.

As described above, when the charges accumulated in the CCDs are moved in the scan direction to an adjacent line, the charges are moved in parallel by being synchronized with the movement of an image. However, when the accumulated charges are perpendicularly moved to be output to the signal processing unit, since the accumulated charges are transmitted by serially moving the accumulated charges one-by-one in a stopped state, there is a problem in that it takes much time when the accumulated charges are moved perpendicularly.

Particularly, in the TDI line image sensor, because the number of CCDs perpendicularly arranged in series in each line is relatively greater than the number of lines arranged in the scan direction in order to have a high resolution, there is a problem in that the accumulated charges moving and being output perpendicularly tend to delay the overall scanning process by the TDI line sensor.

The present invention is provided to address the above-described problems, and it is an object of the present invention to provide a time delay integration (TDI) line image sensor in which the pixel unit includes charge-coupled devices (CCDs) configured to accumulate charges in accordance with a TDI method, and the output unit performs analog-to-digital (AD) conversion on charges accumulated in CCDs in each column, stores the resulting signals in a memory buffer, and then sequentially outputs the stored signals, thereby improving its resolution and transmission rate and reducing power consumption and noise, owing to the characteristics of CCDs and complementary metal-oxide-semiconductor (CMOS) devices.

### [Technical Solutions]

One aspect of the present invention provides a TDI line image sensor, the sensor including a pixel unit including line sensors having M charge-coupled devices (CCDs) arranged in a line, wherein N line sensors are arranged in the scan direction, configured to move, in the scan direction, charges accumulated in respective columns of the line sensors and accumulate the charges, and an output unit configured to receive, parallelly as inputs, the charges accumulated at the respective columns of the pixel unit, to perform analog-to-digital (AD) conversion on the charges, to store the charges, and then to sequentially output the charges.

The output unit may include M amplifiers configured to receive the charges accumulated in the pixel unit in parallel at corresponding charge storage nodes of respective columns and amplify the received charges, M AD converters configured to AD-convert output signals from the amplifiers, respectively, and a memory buffer configured to store output signals from the AD converters and sequentially output the stored signals.

The amplifiers may be source follower amplifiers.

### [Advantageous Effects]

A time delay integration (TDI) line image sensor according to the present invention includes a pixel unit configured to accumulates charges on charge-coupled devices (CCDs) in accordance with the TDI method and an output unit configured to perform AD conversion of the charges accumulated on the CCDs in each column, to store the charges in a memory buffer, and to sequentially output the charges, thereby improving the resolution and transmission rate and reducing power consumption and noise due to the characteristics of CCDs and complementary metal-oxide-semiconductor (CMOS) devices.

### [Description of Drawings]

FIG. 1 is a block diagram showing the configuration of a time delay integration (TDI) line image sensor according to one exemplary embodiment of the present invention.
FIG. 2 shows an exemplary structure of the pixel unit of the TDI line image sensor according to one embodiment of the present invention.
FIG. 3 is a schematic diagram showing movement of charges in the TDI line image sensor according to one embodiment of the present invention.

### [Modes of the Invention]

Hereinafter, a time delay integration (TDI) line image sensor according to one embodiment of the present invention will be described with reference to the accompanying drawings. In this process, the thickness of lines, the size of components, and the like illustrated in the drawings may be exaggerated for clarity and convenience of description.

Further, some terms which will be described below are defined in consideration of functions in the present invention, and their meanings may vary depending on, for example, the user or operator's intention or custom. Therefore, the meanings of these terms should be interpreted based on the scope throughout this specification.

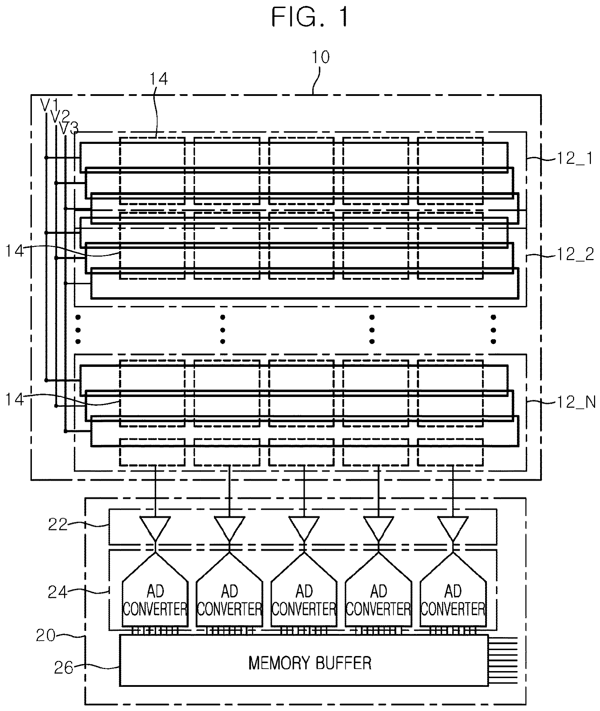

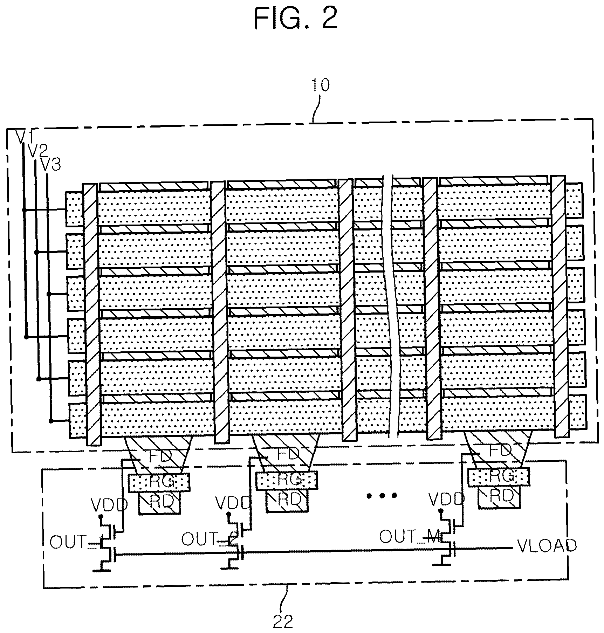

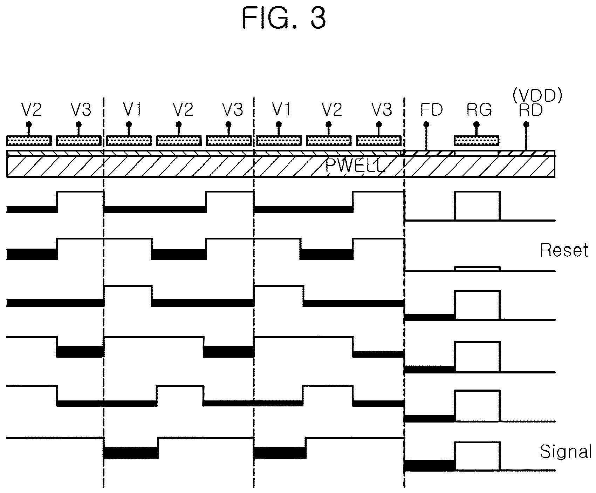

FIG. 1 is a block diagram showing an exemplary configuration of a time delay integration (TDI) line image sensor according to one embodiment of the present invention, and FIG. 2 shows an exemplary structure of the pixel unit of the TDI line image sensor according to one embodiment of the present invention. In addition, FIG. 3 is a schematic diagram showing movement of charges in the TDI line image sensor according to one embodiment of the present invention

As illustrated in FIGS. 1 and 2, the TDI line image sensor according to one embodiment of the present invention includes a pixel unit 10 and an output unit 20.

The pixel unit 10 includes N line sensors 12_1 to 12_N, each having M charge-coupled devices (CCDs) 14 arranged in the form of a line, wherein the N line sensors 12_1 to 12_N are arranged in parallel with the scan direction. The N line sensors 12_1 to 12_N move, in the scan direction, charges accumulated in respective columns of line sensors 12_1 to 12_N using the TDI method, and accumulate the charges.

That is, as shown in FIG. 3, the charges accumulated in each of the CCDs 14 are moved to its adjacent CCD 14 by sequentially controlling each CCD 14's voltages V1, V2, and V3, to be accumulated at a charge storage node FD and be output.

Since the pixel unit 10 may be a general configuration of a pixel unit of a TDI line image sensor, a detailed description of the configuration is not made in the present embodiment.

The output unit 20 receives the charges accumulated in the pixel unit 10 from respective columns in parallel, as inputs, performs AD conversion on the received charges, stores the digital signals, and then sequentially outputs the digital signals. To this end, the output unit 20 includes amplifiers 22, AD converters 24, and a memory buffer 26.

The amplifiers 22 receive the charges accumulated at corresponding charge storage nodes FD on a column-by-column basis and amplify the received charges, respectively. To this end, the amplifiers 22 include M amplifiers corresponding respectively to the CCDs 14 arranged in each line sensor 12_1 to 12_N.

In this case, the amplifiers 22 may be configured as source follower amplifiers. That is, when charges are moved from the last line sensor 12_N of the pixel unit 10, the amplifiers 22 are turned on by accumulated electric potentials at the charge storage nodes FD to output amplified voltage values.

The AD converters 24 AD-convert output signals from the M amplifiers 22, respectively.

The memory buffer 26 stores image signals, which are converted into digital signals at the M AD converters 24, and then sequentially outputs the image signals and allows a signal processing unit (not illustrated) to process the image signals for each line.

When the TDI line image sensor configured in this way performs scanning and imaging, the charges accumulated in the CCDs 14 of each of the line sensors 12_1 to 12_N of the pixel unit 10 using a TDI method are synchronized with the scanning, are moved to an adjacent line sensor 12_1 to 12_N in respective columns thereof, and are output to the charge storage nodes FD of the output unit 20.

After the charges accumulated in the charge storage nodes FD are amplified through the amplifiers 22, AD conversion is performed on the charges, and the charges are output as signals. Then, the charge storage nodes FD may be reset to have a voltage VDD connected to a reset drain RD through a reset gate RG, and may receive charges of a next line sensor 12_1 to 12_N as inputs.

As such, a high resolution image can be obtained with a conventional amount of light by configuring the pixel unit 10 including CCDs in accordance with the TDI method.

Further, since the charges stored in the charge storage nodes FD of the output unit 20 are amplified through the amplifiers 22, converted into digital signals in the AD converters 24, stored in the memory buffer 26, and then output without being moved through the CCDs, the degree of integration and also the transmission rate can be improved even with less power consumption due to the use of complementary metal-oxide-semiconductor (CMOS) devices.

As is apparent from the above description, in a TDI line image sensor according to an embodiment of the present invention, a pixel unit includes CCDs configured in a TDI method, and an output unit receives charges of respective columns accumulated in CCDs of the pixel unit selectively according to a scan direction, performs AD conversion on the received charges, stores the resulting signals in a memory buffer, and then sequentially outputs the stored signals. Therefore, the resolution and transmission rate can be improved, while power consumption and noise can be reduced, owing to the characteristics of CCDs and CMOS devices.

While the present invention has been described with reference to the embodiment illustrated in the accompanying drawings, the embodiment should be considered in a descriptive sense only, and it should be understood by those skilled in the art that various alterations and equivalent other embodiments may be made.

Therefore, the scope of the present invention should be defined by only the following claims.

The following page 11 contains further embodiments.
1. A time delay integration (TDI) line image sensor, the sensor comprising: a pixel unit including N line sensors each having M charge-coupled devices (CCDs) arranged in a line, wherein the N line sensors are arranged horizontally in a scan direction, configured to horizontally move charges accumulated in respective columns of the line sensors and accumulate the charges; and
   an output unit configured to receive the charges accumulated in the pixel unit from the respective columns in parallel as inputs, perform analog-to-digital (AD) conversion on the charges to output a digital signal, store the digital signal, and then sequentially output the digital signal.
2. The sensor of item 1, wherein the output unit includes:
   M amplifiers configured to receive the charges accumulated in the pixel unit from the respective columns in parallel as inputs at charge storage nodes and respectively amplify the charges;
   M AD converters configured to respectively perform AD conversion on signals output from the amplifiers; and
   a memory buffer configured to store and sequentially output the digital signal of the AD converters.
3. The sensor of item 2, wherein the amplifiers are source follower amplifiers.

## Claims

1. A time delay integration (TDI) line image sensor, the sensor comprising:
a pixel unit including N line sensors, each line sensor having M charge-coupled devices (CCDs) arranged in a line in a direction perpendicular to a scan direction, wherein the N line sensors are arranged column-wise, each column comprising one charge coupled device from each line sensor, the columns being extending in the scan direction, and charges are accumulated in the respective columns of the pixel unit; and
an output unit configured to receive the charges accumulated in the pixel unit from the respective columns in parallel as inputs, perform analog-to-digital (AD) conversion on the charges to output a digital signal, store the digital signal, and then sequentially output the digital signal,
wherein the output unit includes:
M amplifiers configured to receive the charges accumulated in the pixel unit from the respective columns in parallel as inputs at charge storage nodes and respectively amplify the charges;
M AD converters configured to respectively perform AD conversion on signals output from the amplifiers; and
a memory buffer configured to store and sequentially output the digital signal of the AD converters,
wherein the amplifiers are configured to be turned on according to electric potentials of the charge storage nodes and output voltage values, the electric potentials being based on charges accumulated at the charge storage nodes in the respective columns, and
wherein the charge storage nodes are reset to a voltage connected to reset drains provided in the respective columns by reset gates provided in the respective columns after the charges are amplified by the amplifies.

2. The TDI line image sensor of claim 1, wherein at least one of the reset gate and the reset drain are provided on the same substrate with a region where the charges are moved and accumulated in the pixel unit.

3. The TDI line image sensor of claim 1, wherein gates of the amplifiers are connected to the charge storage nodes so that the amplifiers are turned on according to electric potentials of the charge storage nodes, and sources of the amplifiers are connected to the AD converters so that the amplifiers output the voltage values based on the electric potentials to the AD converters.

4. The TDI line image sensor of claim 1, wherein the charge storage node and the reset drain in each column are formed at the same level of layer on the same type of well, and the reset gate in each column is formed on the layer of the charge storage node and the reset drain.

5. The TDI line image sensor of claim 1, wherein nodes to which voltages are applied for movement of charges in each column of the CCDs are formed on the same level with the reset gate, and the nodes and the reset gate share a common substrate.

6. The TDI line image sensor of claim 5, wherein resetting of the charge storage nodes by the reset gates and reception of the charges at the charge storage nodes are performed alternatingly in the respective columns.
